# EUROPEAN PATENT SPECIFICATION

(11) **EP 1 424 311 B1**
(45) Date of publication and mention of the grant of the patent: **25.07.2012**
(21) Application number: 02763011.0
(22) Date of filing: 04.09.2002
(51) Int. Cl.: C02F 1/44, B01D 61/04, B01D 71/56, C02F 1/42, C02F 1/20, C02F 1/50, C02F 1/70, C02F 1/72, C02F 1/64, C02F 5/14, B01D 19/00

(54) **METHOD OF MULTI-STAGE REVERSE OSMOSIS TREATMENT**
VERFAHREN ZUR MEHRSTUFIGEN UMKEHROSMOSEBEHANDLUNG
PROCEDE DE TRAITEMENT PAR OSMOSE INVERSE A PLUSIEURS ETAGES

(30) Priority: 06.09.2001 JP 2001270419
(43) Date of publication of application: 02.06.2004
(73) Proprietor: NITTO DENKO CORPORATION, Ibaraki-shi, Osaka 567-8680 (JP)
(72) Inventor: ANDO, Masaaki, c/o NITTO DENKO CORPORATION, Ibaraki-shi, Osaka 567-8680 (JP); ISHIHARA, Satoru, c/o NITTO DENKO CORPORATION, Ibaraki-shi, Osaka 567-8680 (JP)
(74) Representative: Schwarzensteiner, Marie-Luise
(86) International application number: PCT/JP2002/008991
(87) International publication number: WO 2003/022751

(56) References cited:
- WO-A-02/00551
- JP-A- 2 002 827
- JP-A- 4 100 589
- JP-A- 8 337 769
- JP-A- 9 057 067
- JP-A- 11 267 645
- JP-A- 62 294 484
- JP-A- 2000 033 237
- JP-A- 2000 237 748
- US-A- 5 250 185
- PATENT ABSTRACTS OF JAPAN vol. 2000, no. 06, 22 September 2000 (2000-09-22) & JP 2000 070933 A (KURITA WATER IND LTD), 7 March 2000 (2000-03-07)
- DATABASE WPI Week 199948 Derwent Publications Ltd., London, GB; AN 1999-565016 XP002337697 & JP 11 244666 A (KURITA WATER IND LTD) 14 September 1999 (1999-09-14)

## Description

### Technical Field

The present invention relates to a multistage reverse osmosis treatment method for performing reverse osmosis treatment of liquid, in particular, desalination of salt water, sea water, and the like in a reverse osmosis separation module incorporating a reverse osmosis membrane element.

### Background Art

Recently, a separation technique using a reverse osmosis membrane is being used widely for water conversion by desalination of salt water, sea water, etc., production of superpure water, and the like. In the case of desalinating liquid to a high degree by using a reverse osmosis membrane module, there is a known method for supplying permeated water of a first-stage reverse osmosis membrane module to a second-stage reverse osmosis membrane module and further performing desalination (JP 2000-102785 A). In this case, the permeated water of the first-stage reverse osmosis membrane module is used in the second-stage reverse osmosis treatment. Therefore, it is required to obtain a maximum recovery ratio (ratio of the amount of permeated water obtained with respect to the amount of supply water).

In the case of setting a recovery ratio, it is required to set the recovery ratio in such a range as not to allow soluble salt to exceed its saturation solubility due to condensation to be precipitated in water. Therefore, for example, in the case of treating raw water containing a large amount of silica, it may be effective that supply water to the second-stage reverse osmosis membrane module is supplied in an alkaline state so as to increase the solubility of silica to obtain a high recovery ratio. Furthermore, even in the case of treating boron that is dissociated into an ion state at pH 9 or more, the blocking ratio of the reverse osmosis membrane with respect to boron is enhanced greatly in this pH region, so that the supply water to the second-stage reverse osmosis membrane module may be supplied in an alkaline state.

However, in the case where the supply water to the second-stage reverse osmosis membrane module contains a trace amount of iron or manganese ions, when a membrane material of the reverse osmosis membrane module is total aromatic polyamide, particularly, manganese ions cause the decomposition of the total aromatic polyamide.

According to the study by the inventors of the present invention, particularly, in the case where the supply water to the second and subsequent stage reverse osmosis membrane modules is set in an alkaline state, dissolved carbonate ions (HCO₃⁻) and sodium bisulfite that is a reducing agent of chlorine used for disinfecting a system interact with iron or manganese to decompose total aromatic polyamide of the reverse osmosis membrane module, whereby original reverse osmosis membrane performance will not be exhibited.

JP 11 24 4666 describes a device for processing boron containing waste water. It includes a reverse osmosis membrane through which pH value adjusted water is passed after passing boron containing water through an ion exchange resin tower.

JP 41 00 589 is concerned with a system and apparatus for water treatment. To prevent a remaining small amount of carbon dioxide gas, calcium dihydrocarbonate, etc., from leaking in water the components are removed by using an electrodialyser and a reverse osmosis membrane unit.

JP 11 26 76 45 describes a unit for processing boron containing water. The unit comprises an anion exchanger and a reverse osmosis membrane.

### Disclosure of Invention

The present invention has been achieved so as to solve the above-mentioned problem, and its object is to provide a multistage reverse osmosis treatment method in which the separation performance of second and subsequent reverse osmosis membrane modules is high, liquid can be separated and purified to a high degree, and boron and the like that are not dissociated in a neutral region can be separated at a high blocking ratio.

In order to achieve the above-mentioned object, a multistage reverse osmosis treatment method of the present invention is characterized by the features of claim 1.

### Brief Description of Drawings

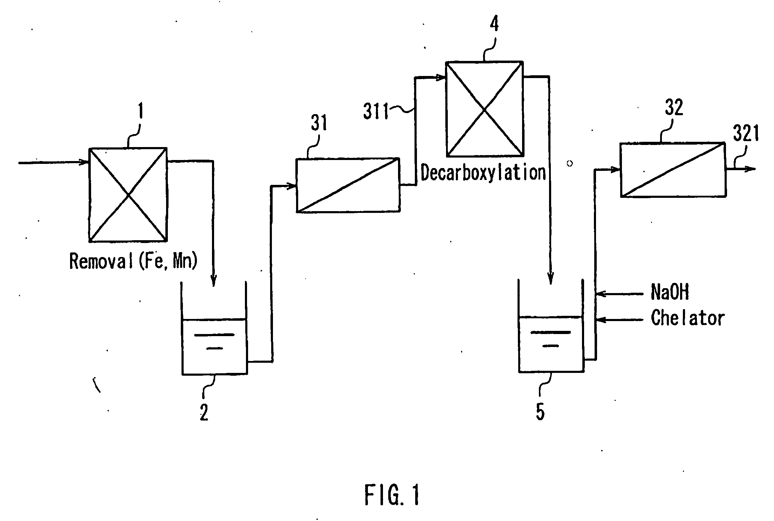

FIG. 1 is a process diagram showing an example of a configuration of a reverse osmosis separation apparatus of the present invention.
1...heavy metal treatment apparatus, 2...raw water tank, 31... first-stage reverse osmosis separation module, 32...second-stage reverse osmosis separation module, 4...ion exchange tower, 5...second-stage supply water tank.

### Best Mode for Carrying Out the Invention

The present invention has been achieved based on the finding that the performance of a reverse osmosis membrane is not decreased by removing any of heavy metal such as iron and manganese, carbonate ions (HCO₃⁻) dissolved in supply water, and sodium bisulfite that is a reducing agent of chlorine, which cause a decrease in the performance of the reverse osmosis membrane.

According to the treatment method of the present invention, dissolved carbonate ions (HCO₃⁻), and iron or manganese ions, which inhibit the original performance of a reverse osmosis membrane, are not substantially present in a system. Therefore, while the original excellent separation function of a reverse osmosis membrane is maintained, the separation performance of a reverse osmosis membrane module can be enhanced remarkably.

In the multistage reverse osmosis treatment method of the present invention, the pH value of supply water preferably is 9 or more. The following is considered: boron generally is present as boric acid, which is not dissociated in the vicinity of neutral pH and hence, cannot be blocked (separated) by a reverse osmosis membrane; however, boric acid is dissociated to boric acid ions in an alkaline region at high pH; therefore, the blocking performance of the reverse osmosis membrane with respect to boron is enhanced. Thus, if the pH value of supply water is 9 or more, the blocking performance of boron is enhanced. Furthermore, in the case where pH exceeds 11, which exceeds the durable pH range of a reverse osmosis membrane, the performance of the reverse osmosis membrane is decreased. Therefore, the above-mentioned pH is preferably in a range of 9 to 11, and more preferably in a range of 9 to 10.

As an alkali agent to be added so as to set the pH value of supply water in an alkaline region, alkali hydroxide metal is preferable. Alkali hydroxide metal is excellent in solubility in water, so that it is easy to handle . Furthermore, by adding alkali hydroxide metal to set the pH value of supply water in an alkaline region, boron can be separated effectively, and a scale caused by metal ions is not generated. Therefore, a phenomenon, in which a scale is deposited on a membrane surface to decrease a treatment efficiency of liquid, can be prevented.

According to the multistage reverse osmosis treatment method of the present invention, a reducing agent may be added to permeated water for the following reason. Practically, a disinfectant such as chlorine is added often for the purpose of disinfecting an operation system of a reverse osmosis membrane module, and a disinfecting effect is enhanced by adding a reducing agent to chlorine or the like. As the reducing agent, a sulfite or a bisulfite preferably is used. By using a sulfite or a bisulfite with the above-mentioned disinfectant, desalinated water or the like can be produced stably by a reverse osmosis membrane module without any influence such as generation of a microorganism and degradation of membrane performance by a disinfectant.

According to the multistage reverse osmosis treatment method of the present invention, a reverse osmosis membrane of the second step is an aromatic polyamide type complex membrane. The reverse osmosis membrane with such a configuration is excellent in desalination performance, water permeability, and separation performance of ionic materials, and further, can separate a non electrolytic organic substance such as isopropyl alcohol and a solute such as boron at a high blocking ratio.

According to the multistage reverse osmosis treatment method of the present invention, the supply water to the second-stage reverse osmosis separation module is subjected to at least one treatment selected from deferrization and demanganization, and addition of a chelator for complexing heavy metals or heavy metal ions. Thus, these treatments can be performed with respect to supply water to the first-stage reverse osmosis separation module, as well as permeated water of the first-stage reverse osmosis separation module before addition of an alkali agent and/or permeated water of the first-stage reverse osmosis separation module after addition of an alkali agent.

According to the present invention, as deferrization (hereinafter, also referred to as "Fe removal treatment"), and demanganization (hereinafter, also referred to as "Mn removal treatment"), a general method for removing heavy metal such as iron and manganese can be used. Examples thereof include, but are not limited to: a method for adding an oxidizing agent such as ozone, chlorine gas, air, and potassium permanganate to permeated water so as to oxidize and precipitate metal ions such as manganese and iron in the permeated water, and thereafter, passing the resultant permeated water through a membrane module such as a precision filtering membrane or the like to remove the metal components; and a method for adding a chlorine type oxidizing agent such as chlorine to permeated water, passing the resultant permeated water through a filter bed of manganese sand or a floating layer of a slurry containing manganese dioxide to oxidize and precipitate manganese, and filtering the liquid thus obtained with a permeation membrane such as a hollow fiber type precision filtering membrane to remove manganese. Furthermore, metal ions can be removed by directly introducing permeated water to a reverse osmosis membrane module to perform permeation without performing such preliminary metal oxidizing treatment.

In order to minimize the interaction between iron and manganese, and the dissolved HCO₃⁻ and the reducing agent, it is preferable that the supply water to the first-stage reverse osmosis separation module is subjected to deferrization and demanganization. However, the permeated water (pH 5 to 6) of the first-stage reverse osmosis separation module before addition of an alkali agent may be subjected to deferrization and demanganization. Thus, there is no particular limit.

Since iron and manganese may become direct factors of decomposing an aromatic polyamide reverse osmosis membrane module, it is most effective to remove these heavy metals by the above-mentioned Fe removal and Mn removal treatments: However, in the case where this direct removal cannot be performed due to the setting space of an apparatus and cost, it also is effective to add a chelator or a scale inhibitor for trapping heavy metal such as iron and manganese. Because of the addition of a chelator or a scale inhibitor, the chelator or the scale inhibitor forms a complex with heavy metal or heavy metal ions contained in permeated water so as to prevent a decrease in the performance of a reverse osmosis membrane.

There is no particular limit to the chelator or the scale inhibitor. A general chelator or scale inhibitor of a polymer type, an organic type, or an inorganic type can be used. Examples of the polymer type chelator or scale inhibitor include polyacrylic acid (polyacrylate), polystyrene sulfonic acid (sulfonate), a maleic anhydride (co)polymer, lignin sulfonic acid (sulfonate), and the like. Examples of the organic type chelator or scale inhibitor include phosphonic acid (phosphonate) such as aminotrimethylene phosphonic acid (phosphonate) and phosphonobutane tricarboxylic acid (tricarboxylate), polyaminocarboxylic acid (polyaminocarboxylate), hydroxycarboxylic acid (hydroxycarboxylate), condensed phosphoric acid (phosphate), and the like. Among them, polyaminocarboxylic acid (polyaminocarboxylate), hydroxycarboxylic acid (hydroxycarboxylate), and condensed phosphoric acid (phosphate) are preferable. As polyaminocarboxylic acid, nitrilotriacetic acid, ethylenediaminetetraacetic acid, diethylenetriaminepentaacetic acid, and the like are preferable. As hydroxycarboxylic acid, citric acid, malic acid, and the like are preferable. Examples of the salt thereof include alkaline metal salts such as sodium, potassium, and lithium; ammonium salts, alkanolamine salts, and the like. Furthermore, as condensed phosphoric acid, pyrophosphoric acid, tripolyphosphoric acid, tetrametaphosphoric acid, hexametaphosphoric acid, trimetaphosphoric acid, and the like are preferable. Examples of the salt thereof include alkaline metal salts such as sodium, potassium, and lithium; and ammonium salts.

The adding amount of the chelator or the scale inhibitor is varied depending upon the kind of an agent to be used, the properties of liquid (calcium hardness, phosphoric acid concentration, etc.), the liquid temperature, and the permeation flow rate, and there is no particular limit to the adding amount. In general, in order to trap heavy metal and heavy metal ions effectively, the chelator or the scale inhibitor may be added in a concentration of an equivalent or less with respect to iron and manganese.

It is preferable that the chelator or the scale inhibitor is added to the permeated water of the first-stage reverse osmosis separation module in which the amount of iron and manganese is small, in terms of the prevention of degradation in the quality of water due to the excessive addition. However, the chelator or the scale inhibitor may be added to the supply water to the first-stage reverse osmosis separation module, and there is no particular limit.

According to the present invention, decarboxylation is performed for the purpose of removing HCO₃⁻ that causes the interaction of iron/manganese. In order to effect decarboxylation efficiently, it is preferable that decarboxylation is performed in a state where the ratio of dissolved carbon dioxide is large, i.e., at low pH. Because of this, it is preferable that the permeated water (pH 5 to 6) of the first-stage reverse osmosis separation module before addition of an alkali agent is subjected to decarboxylation. Needless to say, the supply water to the first-stage reverse osmosis separation module may be subjected to decarboxylation, and there is no particular limit. As the decarboxylation method, a general method for removing dissolved carbon dioxide can be used. An example thereof includes a method for providing a decarboxylation apparatus before or after the first-stage reverse osmosis membrane separation module of the present invention, thereby performing decarboxylation. As the decarboxylation apparatus, it is possible to use a decarboxylation tower for passing water to be treated and air through a filling to perform counter-current contact, and an apparatus generally used for producing pure water, such as a membrane deaerator, a vacuum deaerator, a nitrogen deaerator, and a warming deaerator.

In operation of a reverse osmosis separation module, generally, a chlorine type disinfectant such as chlorine is used often for the purpose of preventing the generation of microorganisms in water to be treated, and a disinfecting effect is enhanced by adding a reducing agent to the disinfectant. From a practical point of view, it is difficult to employ a system using chlorine or the like as a disinfectant without adding a reducing agent. Thus, according to the multistage reverse osmosis treatment method of the present invention, it is preferable to add a reducing agent to liquid (supply water to the first stage) and/or permeated water. By performing removal of the above-mentioned heavy metal, masking, and decarboxylation (removal of HCO₃⁻), the interaction between the reducing agent and the heavy metal is suppressed, so that the performance of a reverse osmosis membrane can be maintained.

Herein, the reducing agent refers to an agent having a property of reducing an oxidizing material such as chlorine, and there is no particular limit thereto. Those which are water-soluble and have a large reducing property and less effect on a reverse osmosis membrane are used preferably. A sulfite or a bisulfite such as sodium sulfite and sodium bisulfite is particularly preferable, since they are easy to handle and inexpensive.

The concentration of the disinfectant depends upon the quality of liquid (supply water to the first stage) to be used. In general, the concentration of the added disinfectant is about 0.5 to 10 ppm. Furthermore, the amount of the reducing agent depends upon the amount of the disinfectant; however, in general, 3 to 6 mg of sodium bisulfite is added to 1 mg of chlorine.

According to the present invention, it is preferable that the above-mentioned decarboxylation, Fe removal treatment and Mn removal treatment are all performed. Practically, an effect can be exhibited by performing either of them. In this case, the concentration of HCO₃⁻ and the concentration of iron and manganese in the supply water to the second-stage reverse osmosis separation module are determined appropriately depending upon the treatment conditions.

There is no particular limit to an alkali agent used in the present invention. Examples of the alkali agent include alkali hydroxide metal such as NaOH and KOH, ammonium hydroxide such as NH₄OH, carbonate such as Na₂CO₃, silicate, and the like. Alkali hydroxide metal preferably is used since it is inexpensive in terms of cost, has excellent solubility with respect to water, does not generate any scale caused by multivalent metal ions, and the like.

There is no particular limit to a material constituting a reverse osmosis membrane in the reverse osmosis separation module used in the present invention. For example, various kinds of polymer materials such as cellulose acetate, polyvinyl alcohol, polyamide, polyester, and the like can be used. Among them, a polyamide type reverse osmosis membrane is preferable since it is excellent in the separation performance of various kinds of organic substances such as trihalomethane (e.g., trichloromethane, tribromomethane, etc.). Particularly, in the case where an aromatic polyamide type complex membrane is applied, the effect of the present invention is exhibited most.

Examples of a membrane form of a reverse osmosis membrane include hollow fibers and a flat membrane. The treatment method of the present invention can be used in any form.

- The reverse osmosis separation modules used in the first, second, and subsequent stages are not particularly limited in terms of their shape, configuration, and the like. For example, any type such as a spiral type, a hollow type, a tubular type, a frame-and-plate type, and the like can be used. The flat membrane can be used by being incorporated into a spiral, tubular, or frame-and-plate module. As to the hollow fibers, a plurality of bundled fibers incorporated into a module can be used.

According to the treatment method of the present invention, liquid is subjected to reverse osmosis treatment in a first-stage reverse osmosis separation module to obtain permeated water. Then, an alkali agent and the permeated water subjected to at least one treatment selected from the above-mentioned deferrization, demanganization, decarboxylation, and addition of a chelator or a scale inhibitor are supplied to a second-stage reverse osmosis separation module, whereby permeated water can be obtained at the maximum recovery ratio. Each of the above-mentioned treatments may be performed with respect to the supply water to the first-stage reverse osmosis separation module.

Hereinafter, the present invention will be described in detail with reference to the drawings. FIG. 1 shows an example of a configuration of a reverse osmosis separation apparatus used in the present invention. The apparatus includes a heavy metal treatment device 1 for removing Fe and/or Mn contained in liquid (raw water) to be separated and purified, and a raw water tank 2 for storing raw water. The raw water is supplied to a first-stage reverse osmosis separation module 31 through a transport pump, whereby first-stage reverse osmosis treatment is performed. In the first-stage reverse osmosis separation module, a first-stage permeated water discharge tube 311 for sending permeated water to an ion exchange tower 4 is provided. The permeated water is transported to the ion exchange tower 4 and subjected to decarboxylation therein.

The permeated water subjected to decarboxylation is transported to a second-stage supply water tank 5, and once stored therein. An alkali agent (NaOH) and a chelator or a scale inhibitor are injected to the permeated water in the supply water tank 5 through a pump, whereby the pH of the permeated water whose pH is in a range of 5 to 6 is adjusted in an alkaline region, preferably in a range of 9 to 11. The permeated water that has been made alkaline is supplied to a second-stage reverse osmosis separation module 32 through a second-stage transport pump (not shown), whereby second-stage reverse osmosis treatment is performed. The permeated water obtained by the second-stage reverse osmosis treatment is taken out from the second-stage permeated water discharge tube 321.

According to the present invention, in the case where sea water is used as raw water, permeated water satisfying the water quality criterion under the Water Works Law can be obtained, except for boron, by the reverse osmosis treatment in the first-stage reverse osmosis separation module. The raw water supplied to the first-stage reverse osmosis separation module is adjusted to be weakly acid so as to prevent precipitation of calcium carbonate. Therefore, boric acid is present in a non-dissociated state. The content of boron in the raw water to the first-stage reverse osmosis separation module generally is about 4.0 to 5.0 ppm. The content of boron in the first-stage permeated water does not satisfy 1 ppm or less of the water quality criterion under the Water Works Law due to the change with the passage of year, depending upon the operation conditions.

However, according to the method of the present invention, an alkali agent is added to the first-stage permeated water to adjust the pH of the permeated water in an alkaline region. Therefore, boron is dissociated to be present in an ion state as boric acid ions. In general, the blocking ratio of the reverse osmosis separation module with respect to boric acid ions is larger than that with respect to boric acid in a non-dissociated state. Therefore, the first-stage permeated water adjusted to be in a alkaline state is subjected again to reverse osmosis treatment in the second-stage reverse osmosis separation module, whereby the content of boron in the second-stage permeated water obtained finally can be set to be 1 ppm or less.

According to the present invention, in the first and second reverse osmosis separation modules, for example, as a first-stage membrane, a reverse osmosis membrane preferably is used, which has a salt blocking ratio of 99.4% or more when operated for one hour at 25°C and an operation pressure of 5.49 MPa, using a solution of salt with pH of 6.5 to 7 and a concentration of 3.5wt% as raw water, and as a second-stage membrane, a reverse osmosis membrane preferably is used, which has a salt blocking ratio of 99.0% or more when operated for one hour at 25°C and an operation pressure of 0.74 MPa, using a solution of salt with pH of 6.5 to 7 and a concentration of 0.05wt% as raw water.

In the first-stage and second-stage reverse osmosis separation modules, respective modules (units) are connected in series or in parallel, supply sides of these plurality of module units may be connected together to a supply tube of raw water, and permeation sides thereof may be connected together to a permeated water discharge tube. Furthermore, by connecting a third-stage reverse osmosis separation module after the second-stage reverse osmosis separation module, multistage desalination treatment may be performed.

As described above, the multistage reverse osmosis treatment method of the present invention can be preferably used for water conversion by desalination of salt water, sea water, and the like, production of superpure water, and the like. Furthermore, the method also can be used for removing and collecting a contamination source or an effective material contained in industrial waste water or the like that causes pollution, such as dye waste water and electrodeposition paint waste water. Thus, the method can contribute to closing of waste water. In addition, the method can be used for condensation of an effective component, and water treatment such as removal of a harmful component of clean water and sewage.

Hereinafter, the present invention will be described more specifically by way of examples.

### Example 1

An NaCl aqueous solution (pH 6.5) with a concentration of 500 mg/L was subjected to reverse osmosis treatment, using a total aromatic polyamide type reverse osmosis membrane (Trade Name: ES20, produced by Nitto Denko Corporation) under the condition of 25°C and an operation pressure of 0.74 MPa, whereby reverse osmosis membrane permeated water containing 0.05 ppm of iron, 0.05 ppm of manganese, and 3 ppm of sodium bisulfite was obtained. The permeated water was decarboxylated to set the amount of HCO₃⁻ to be 1 ppm, and the water thus obtained was adjusted to pH 10 with NaOH. This water was subjected to a continuous flow test for 30 days under the condition of 25°C and an operation pressure of 0.74 MPa, using a flat membrane cell made of a total aromatic polyamide type reverse osmosis membrane (Trade Name: ES20, produced by Nitto Denko Corporation) with an effective membrane area of 60 cm². Table 1 shows the performance of the flat membrane before and after the test.

**Table 1**

| | Salt blocking ratio (%) | Amount of permeated water (m³/m²/day) |
|---|---|---|
| Before test | 99.5 | 1.1 |
| 30 days after test | 99.6 | 0.9 |

As is apparent from Table 1, a large change was not recognized in the performance of the reverse osmosis membrane before and after the test.

### Example 2

An NaCl aqueous solution (pH 6.5) with a concentration of 500 mg/L, subjected to deferrization and demanganization, was subjected to reverse osmosis treatment, using a total aromatic polyamide type reverse osmosis membrane (Trade Name: ES20, produced by Nitto Denko Corporation) under the condition of 25°C and an operation pressure of 0.74 MPa, whereby reverse osmosis membrane permeated water containing 3 ppm of sodium bisulfite and 30 ppm of HCO₃⁻ without containing iron and manganese was obtained. The permeated water was adjusted to pH 10 with NaOH without being decarboxylated. Thereafter, the permeated water was subjected to a continuous flow test for 30 days under the condition of 25°C and an operation pressure of 0.74 MPa, using a flat membrane cell made of a total aromatic polyamide type reverse osmosis membrane (Trade Name: ES20, produced by Nitto Denko Corporation) with an effective membrane area of 60 cm². Table 2 shows the performance of the flat membrane before and after the test.

**Table 2**

| | Salt blocking ratio (%) | Amount of permeated water (m³/m²/day) |
|---|---|---|
| Before test | 99.5 | 1.1 |
| 30 days after test | 99.5 | 0.9 |

As is apparent from Table 2, a large change was not recognized in the performance of the reverse osmosis membrane before and after the test.

### Example 3

An NaCl aqueous solution (pH 6.5) with a concentration of 500 mg/L was subjected to reverse osmosis treatment, using a total aromatic polyamide type reverse osmosis membrane (Trade Name: ES20, produced by Nitto Denko Corporation) under the condition of 25°C and an operation pressure of 0.74 MPa, whereby reverse osmosis membrane permeated water containing 0.05 ppm of iron, 0.05 ppm of manganese, 3 ppm of sodium bisulfite, and 30 ppm of HCO₃⁻ was obtained. Then, 3 ppm of sodium hexametaphosphate having the ability of generating a chelate was added to the permeated water, and the resultant permeated water was adjusted to pH 10 with NaOH. The permeated water was subjected to a continuous flow test for 30 days under the condition of 25°C and an operation pressure of 0.74 MPa, using a flat membrane cell made of a total aromatic polyamide type reverse osmosis membrane (Trade Name: ES20, produced by Nitto Denko Corporation) with an effective membrane area of 60 cm².

**Table 3**

| | Salt blocking ratio (%) | Amount of permeated water (m³/m²/day) |
|---|---|---|
| Before test | 99.4 | 1.1 |
| 30 days after test | 99.5 | 1.0 |

As is apparent from Table 3, a large change was not recognized in the performance of the reverse osmosis membrane before and after the test.

### Example 4

An NaCl aqueous solution (pH 6.5) with a concentration of 500 mg/L was subjected to reverse osmosis treatment using a total aromatic polyamide type reverse osmosis membrane (Trade Name: ES20, produced by Nitto Denko Corporation) under the condition of 25°C and an operation pressure of 0.74 MPa, whereby reverse osmosis membrane permeated water containing 0.03 ppm of iron, 0.03 ppm of manganese, 3 ppm of sodium bisulfite, and 30 ppm of HCO₃⁻ was obtained. Then, 3 ppm of sodium hexametaphosphate having the ability of generating a chelate was added to the permeated water, and the resultant permeated water was adjusted to pH 10 with NaOH. The permeated water was supplied to a spiral type reverse osmosis membrane element (Trade Name: ES20) produced by Nitto Denko Corporation made of an aromatic polyamide type complex reverse osmosis membrane, whereby the permeated water was subjected to a continuous flow test for 30 days under the condition of 25°C and an operation pressure of 0.74 MPa. Table 4 shows the performance of the element before and after the test.

**Table 4**

| | Salt blocking ratio (%) | Amount of permeated water (m³/m²/day) |
|---|---|---|
| Before test | 99.4 | 7.2 |
| 30 days after test | 99.5 | 6.9 |

As is apparent from Table 4, a large change was not recognized in the performance of the reverse osmosis membrane before and after the test.

### Comparative Example 1

Reverse osmosis membrane permeated water containing 0.05 ppm of iron, 0.05 ppm of manganese, 3 ppm of sodium bisulfite, and 30 ppm of HCO₃⁻, obtained in the same way as in Example 1, was adjusted to pH 10 with NaOH. The permeated water was subjected to a continuous flow test for 30 days using a flat membrane test cell with an effective membrane area of 60 cm² in the same way as in Example 1. Table 5 shows the performance of the flat membrane before and after the test.

**Table 5**

| | Salt blocking ratio (%) | Amount of permeated water (m³/m²/day) |
|---|---|---|
| Before test | 99.4 | 1.0 |
| 30 days after test | 55.2 | 3.2 |

As is apparent from Table 5, the blocking ratio was decreased and the amount of the permeated water was increased before and after the test, whereby the performance of the reverse osmosis membrane was decreased.

### Comparative Example 2

Reverse osmosis membrane permeated water containing 0.03 ppm of iron, 0.03 ppm of manganese, 3 ppm of sodium bisulfite, and 30 ppm of HCO₃⁻, obtained in the same way as in Example 4, was adjusted to pH 10 with NaOH. The permeated water was supplied to a spiral type reverse osmosis membrane element (Trade Name: ES20) produced by Nitto Denko Corporation in the same way as in Example 4, whereby the permeated water was subjected to a continuous flow test for 30 days. Table 6 shows the performance of the element before and after the test.

**Table 6**

| | Salt blocking ratio (%) | Amount of permeated water (m³/m²/day) |
|---|---|---|
| Before test | 99.3 | 7.4 |
| 30 days after test | 52.1 | 15.5 |

As is apparent from Table 6, the blocking ratio was decreased and the amount of the permeated water was increased before and after the test, whereby the performance of the reverse osmosis membrane was decreased.

### Industrial Applicability

As described above, the multistage reverse osmosis treatment method of the present invention can prevent a phenomenon in which carbonate ions dissolved in supply water and sodium bisulfite that is a reducing agent of chlorine used for the purpose of disinfection interact with iron or manganese to decompose a membrane of a reverse osmosis membrane module, in particular, an aromatic polyamide membrane. Therefore, the performance of a reverse osmosis membrane in the second-stage reverse osmosis separation module can be prevented from decreasing, and stable operation can be performed for a long period of time.

Furthermore, according to the method of the present invention, since the ability of blocking boron ions contained in sea water is high, permeated water with a content of boron of 1 ppm or less (that is a criterion value) can be obtained.

## Claims

1. A multistage reverse osmosis treatment method comprising:
subjecting liquid to reverse osmosis treatment in a first-stage reverse osmosis separation module (31); adding an alkali agent to permeated water obtained from the first-stage reverse osmosis separation module (31) to adjust a pH value of the permeated water in an alkaline region; and further subjecting the permeated water to reverse osmosis treatment in a second-stage reverse osmosis separation module (32),
wherein the second-stage reverse osmosis separation module (32) includes an aromatic polyamide type reverse osmosis membrane,
at least one of supply water to the first-stage reverse osmosis separation module (31) and permeated water of the first stage reverse osmosis separation module (31) before addition of an alkali agent is subjected to deferrization and demanganization treatment, and/or addition of a heavy metal or heavy metal ions complexing agent and
boron is removed in the second-stage reverse osmosis separation module.

2. The multistage reverse osmosis treatment method according to claim 1, wherein a pH value of the supply water supplied to the second-stage reverse osmosis treatment is in a range of 9 to 11.

3. The multistage reverse osmosis treatment method according to claim 2, wherein the pH value of the supply water supplied to the second-stage reverse osmosis treatment is in a range of 9 to 10.

4. The multistage reverse osmosis treatment method according to claim 1, wherein a disinfectant containing chlorine and a reducing agent are added to the supply water supplied to the second-stage reverse osmosis treatment.

5. The multistage reverse osmosis treatment method according to claim 4, wherein a concentration of the disinfectant is in a range of 0.5 to 10 ppm, and a concentration of the reducing agent is in a range of 3 to 6 mg with respect to 1 mg of chlorine.

6. The multistage reverse osmosis treatment method according to claim 4, wherein the reducing agent is at least one sulfite or bisulfite selected from sodium sulfite and sodium bisulfite.

7. The multistage reverse osmosis treatment method according to claim 1, wherein the deferrization includes oxidizing and precipitating iron ions by adding an oxidizing agent to separate the iron ions.

8. The multistage reverse osmosis treatment method according to claim 1, wherein the demanganization includes oxidizing and precipitating manganese ions by adding an oxidizing agent to separate the manganese ions.

9. The multistage reverse osmosis treatment method according to claim 1, wherein the supply water to the second-stage reverse osmosis separation module (32) is subjected to decarboxylation, and the decarboxylation is at least one treatment selected from treatment by a decarboxylation tower for passing water to be treated and air through a filling to perform counter-current contact, treatment by a membrane deaerator, treatment by a vacuum deaerator, treatment by a nitrogen deaerator, and treatment by a warming deaerator.

10. The multistage reverse osmosis treatment method according to claim 1, wherein the reverse osmosis membrane is an aromatic polyamide type complex membrane.

11. The multistage reverse osmosis treatment method according to claim 1, comprising at least one subsequent reverse osmosis separation module.

## Patentansprüche

1. Verfahren zur mehrstufigen Umkehrosmosebehandlung, umfassend:
Flüssigkeit wird einer Umkehrosmosebehandlung in einem Umkehrosmose-Trennungsmodul (31) der ersten Stufe unterworfen; ein Alkalimittel wird Permeatwasser zugegeben, das aus dem Umkehrosmose-Trennungsmodul (31) der ersten Stufe erhalten wurde, um einen pH-Wert des Permeatwassers im alkalischen Bereich einzustellen; und das Permeatwasser wird einer Umkehrosmosebehandlung in einem Umkehrosmose-Trennungsmodul (32) der zweiten Stufe unterworfen,
worin das Umkehrosmose-Trennungsmodul (32) der zweiten Stufe eine Umkehrosmosemembran vom Typ aromatisches Polyamid umfasst,
Reinwasser, das dem Umkehrosmose-Trennungsmodul (31) der ersten Stufe zugegeben wird und/oder Permeatwasser des Umkehrosmose-Trennungsmoduls (31) der ersten Stufe wird/werden vor Zugabe eines Alkalimittels einer Enteisenungs- und Entmanganisierungsbehandlung und/oder der Zugabe eines Schwermetall- oder Schwermetallionen-Komplexierungsmittels unterworfen und
Bor wird in dem Umkehrosmose-Trennungsmodul der zweiten Stufe entfernt.

2. Verfahren zur mehrstufigen Umkehrosmosebehandlung gemäß Anspruch 1, worin der pH-Wert des in die Umkehrosmosebehandlung der zweiten Stufe eingespeisten Reinwassers im Bereich von 9 bis 11 liegt.

3. Verfahren zur mehrstufigen Umkehrosmosebehandlung gemäß Anspruch 2, worin der pH-Wert des in die Umkehrosmosebehandlung der zweiten Stufe eingespeisten Reinwassers im Bereich von 9 bis 10 liegt.

4. Verfahren zur mehrstufigen Umkehrosmosebehandlung gemäß Anspruch 2, worin ein Chlor enthaltendes Desinfektionsmittel und ein Reduktionsmittel dem der Umkehrosmosebehandlung der zweiten Stufe eingespeisten Reinwasser zugegeben wird.

5. Verfahren zur mehrstufigen Umkehrosmosebehandlung gemäß Anspruch 4, worin die Konzentration des Desinfektionsmittels im Bereich von 0,5 bis 10 ppm und die Konzentration des Reduktionsmittels im Bereich von 3 bis 6 mg bezogen auf 1 mg Chlor liegt.

6. Verfahren zur mehrstufigen Umkehrosmosebehandlung gemäß Anspruch 4, worin das Reduktionsmittel wenigstens ein Sulfit oder Bisulfit ist, ausgewählt aus Natriumsulfit oder Natriumbisulfit.

7. Verfahren zur mehrstufigen Umkehrosmosebehandlung gemäß Anspruch 1, worin die Enteisenung das Oxidieren und Ausfällen von Eisenionen durch Zugabe eines Oxidationsmittels zur Abtrennung der Eisenionen umfasst.

8. Verfahren zur mehrstufigen Umkehrosmosebehandlung gemäß Anspruch 1, worin die Entmanganisierung das Oxidieren und Ausfällen von Manganionen durch Zugabe eines Oxidationsmittels zur Abtrennung der Manganionen umfasst.

9. Verfahren zur mehrstufigen Umkehrosmosebehandlung gemäß Anspruch 1, worin das in das Umkehrosmose-Trennungsmodul (32) der zweiten Stufe eingespeiste Reinwasser einer Decarboxylierung unterworfen wird und die Decarboxylierung wenigstens eine Behandlung ist, ausgewählt aus der Behandlung durch einen Decarboxylierungsturm, um zu behandelndes Wasser und Luft zur Durchführung eines Gegenstromkontakts durch eine Füllung zu leiten, der Behandlung durch einen Membranentgaser, der Behandlung durch einen Vakuumentgaser, der Behandlung durch einen Stickstoffentgaser und der Behandlung durch einen Wärmeentgaser.

10. Verfahren zur mehrstufigen Umkehrosmosebehandlung gemäß Anspruch 1, worin die Umkehrosmosemembran eine Komplexmembran vom Typ aromatisches Polyamid ist.

11. Verfahren zur mehrstufigen Umkehrosmosebehandlung gemäß Anspruch 1, umfassend wenigstens ein nachfolgendes Umkehrosmose-Trennungsmodul.

## Revendications

1. Procédé de traitement par osmose inverse à plusieurs étages comprenant :
la soumission d'un liquide à un traitement d'osmose inverse dans un premier étage d'un module de séparation par osmose inverse (31) ; l'ajout d'un agent alcalin à l'eau de perméation obtenue à partir du premier étage du module de séparation par osmose inverse (31) pour ajuster une valeur de pH de l'eau de perméation dans une zone alcaline ; et en outre la soumission de l'eau de perméation à un traitement d'osmose inverse dans un second étage d'un module de séparation par osmose inverse (32),
dans lequel le second étage du module de séparation par osmose inverse (32) comprend une membrane d'osmose inverse de type polyamide aromatique,
au moins l'une parmi de l'eau d'alimentation au premier étage du de séparation par osmose inverse (31) et de l'eau de perméation du premier étage du module de séparation par osmose inverse (31) avant l'ajout d'un agent alcalin est soumise à un traitement de déferrisation et de démanganisation, et/ou l'ajout d'un agent complexant les métaux lourds ou les ions des métaux lourds et
le bore est éliminé dans le deuxième étage du module de séparation par osmose inverse.

2. Procédé de traitement par osmose inverse à plusieurs étages selon la revendication 1, dans lequel une valeur de pH de l'eau d'alimentation fournie au deuxième étage du traitement d'osmose inverse est dans une plage de 9 à 11.

3. Procédé de traitement par osmose inverse à plusieurs étages selon la revendication 2, dans lequel la valeur de pH de l'eau d'alimentation fournie au deuxième étage du traitement d'osmose inverse est dans une plage de 9 à 10.

4. Procédé de traitement par osmose inverse à plusieurs étages selon la revendication 1, dans lequel un désinfectant contenant du chlore et un agent réducteur sont ajoutés à l'eau d'alimentation fournie au deuxième étage du traitement d'osmose inverse.

5. Procédé de traitement par osmose inverse à plusieurs étages selon la revendication 4, dans lequel une concentration de l'agent désinfectant est dans une plage de 0,5 à 10 ppm, et une concentration de l'agent réducteur est dans une plage de 3 à 6 mg par rapport à 1 mg de chlore.

6. Procédé de traitement par osmose inverse à plusieurs étages selon la revendication 4, dans lequel l'agent réducteur est au moins un sulfite ou un bisulfite choisi parmi le sulfite de sodium et le bisulfite de sodium.

7. Procédé de traitement par osmose inverse à plusieurs étages selon la revendication 1, dans lequel la déferrisation comprend l'oxydation et la précipitation des ions fer par l'ajout d'un agent oxydant pour séparer les ions fer.

8. Procédé de traitement par osmose inverse à plusieurs étages selon la revendication 1, dans lequel la démanganisation comprend l'oxydation et la précipitation des ions manganèse par l'ajout d'un agent oxydant pour séparer les ions manganèse.

9. Procédé de traitement par osmose inverse à plusieurs étages selon la revendication 1, dans lequel l'eau d'alimentation au deuxième étage du module de séparation par osmose inverse (32) est soumise à une décarboxylation, et la décarboxylation est au moins un traitement choisi parmi un traitement par une tour de décarboxylation pour faire passer l'eau à traiter et l'air à travers un matériau de remplissage afin d'effectuer un contact à contre-courant, un traitement par un dégazeur à membrane, un traitement par un dégazeur à dépression, un traitement par un dégazeur à azote, et un traitement par un dégazeur par réchauffement.

10. Procédé de traitement par osmose inverse à plusieurs étages selon la revendication 1, dans lequel la membrane d'osmose inverse est une membrane complexe de type polyamide aromatique.

11. Procédé de traitement par osmose inverse à plusieurs étages selon la revendication 1, comprenant au moins un module de séparation par osmose inverse ultérieur.
